# EUROPÄISCHE PATENTSCHRIFT

(11) **EP 1 419 607 B1**
(45) Veröffentlichungstag und Bekanntmachung des Hinweises auf die Patenterteilung: **12.04.2006**
(21) Anmeldenummer: 02767117.1
(22) Anmeldetag: 22.08.2002
(51) Int. Cl.: H04L 1/18

(54) **VERFAHREN UND FUNKSTATION ZUR ÜBERTRAGUNG VON DATENPAKETEN IN EINEM FUNK-KOMMUNIKATIONSSYSTEM**
METHOD AND WIRELESS STATION FOR TRANSMITTING DATA PACKETS IN A RADIO COMMUNICATION SYSTEM
PROCEDE ET STATION SANS FIL POUR LA TRANSMISSION DE PAQUETS DE DONNEES DANS UN SYSTEME DE COMMUNICATION RADIO

(30) Priorität: 22.08.2001 DE 10141092
(43) Veröffentlichungstag der Anmeldung: 19.05.2004
(73) Patentinhaber: SIEMENS AKTIENGESELLSCHAFT, 80333 München (DE)
(72) Erfinder: GESSNER, Christina, 81373 München (DE); SCHNIEDENHARN, Jörg, 13587 Berlin (DE); MEILING, Axel, 13597 Berlin (DE); KROTH, Norbert, 14471 Potsdam (DE); RAJI, Fariba, A-1200 Wien (AT)
(86) Internationale Anmeldenummer: PCT/DE2002/003081
(87) Internationale Veröffentlichungsnummer: WO 2003/019853

(56) Entgegenhaltungen:
- WO-A-00/60799
- WO-A-00/72498
- WO-A-01/59979

## Beschreibung

Die Erfindung betrifft ein Verfahren und eine Funkstation zur Übertragung von Datenpaketen in einem Funk-Kommunikationssystem, insbesondere in einem Mobilfunksystem.

In Funk-Kommunikationssystemen werden Informationen, wie beispielsweise Sprache, Bildinformationen oder andere Daten, mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunications System) oder andere Systeme der 3. Generation sind Frequenzen im Frequenzband von ca. 2000 MHz vorgesehen. Frequenzmultiplex (FDMA), Zeitlagenmultiplex (TDMA) oder ein als Codemultiplex (CDMA) bekanntes Verfahren dienen dabei der Unterscheidung der Signalquellen.

Im Rahmen der Spezifizierung des UMTS-Standards werden derzeit Verfahren definiert, welche für Paketübertragungen optimiert sein soll. Ein Beispiel hierfür ist der so genannte High Speed Downlink Packet Acces (HSDPA) für den FDD- (Frequency Division Duplex) und TDD-Modus (Time Division Duplex) des UMTS-Standards. Diese Verfahren sollen Dienste (engl. Services) mit verschiedenen Anforderungen hinsichtlich einer Dienstequalität (engl. QoS - Quality of Service) bedienen können. Dabei ist eine Basisstation (NB - Node B) verantwortlich für das so genannte Scheduling von Daten verschiedener Teilnehmer, sowie für so genannte Retransmissions, d.h. wiederholte Übertragungen von fehlerhaft empfangenen Datenpaketen in einem so genannten Hybrid ARQ-Prozess. Hybrid ARQ-Verfahren ziehen ihren Vorteil daraus, dass fehlerhaft empfangene Datenpakete in einem Speicher im Empfänger gespeichert werden, um sie mit nachfolgenden, nochmaligen und gegebenenfalls veränderten Übertragungen der Datenpakete kombinieren zu können. Hierdurch kann im Gegensatz zu bekannten reinen ARQ-Verfahren, in denen fehlerhafte Datenpakete empfangsseitig verworfen werden, vorteilhaft auch von den bereits empfangenen Datenpaketen zur Erhöhung der Empfangsqualität profitiert werden.

Im Empfänger ist es erforderlich, dass die empfangenen Daten in der korrekten, d.h. in der ursprünglich senderseitig vorliegenden Reihenfolge an höhere Protokollschichten (engl. Layer) weitergegeben werden. Da die zeitliche Reihenfolge der korrekt empfangenen Datenpakete, beispielsweise aufgrund von Retransmissions, bei der Übertragung über die Funkschnittstelle durcheinander kommen kann, muss die ursprüngliche Reihenfolge auf der Empfängerseite wieder hergestellt werden. Hierzu ist üblicherweise im Empfänger ein Pufferspeicher (Reordering buffer) verwirklicht, der eine Anzahl von Datenpaketen so lange speichert, bis eine richtige Reihenfolge sichergestellt werden kann. Werden beispielsweise ein zweites und ein drittes Datenpaket korrekt empfangen, während der korrekte Empfang eines erstes Datenpaket noch aussteht, so werden diese beiden Datenpakete so lange gespeichert, bis auch das erste Datenpaket korrekt empfangen wurde. Die Datenpakete werden anschließend in der ursprünglichen Reihenfolge an höhere Protokollschichten im Empfänger weitergereicht.

Durch die Tatsache, dass eine Basisstation potenziell Übertragungen von Datenpaketen zu einer großen Anzahl von Teilnehmern parallel steuern und durchführen muss, auch als User Scheduling bezeichnet, kann es gegebenfalls nachteilig zu großen Verzögerungen kommen, bis ein mehrmals übertragenes Datenpaket korrekt empfangen wird. In diesen Fällen ist gegebenenfalls ein Einhalten der vorgegebenen Dienstequalität nicht mehr möglich, und es kommt zu für den empfangsseitigen Teilnehmer unangenehmen Verzögerungen. Nach WO 00/72498 werden bei Ablauf eines Receive lost timer gespeicherte frames zu einer höheren schicht weitergegeben, auch wenn die sequenz Lücken enthält.

Der Erfindung liegt die Aufgabe zugrunde, ein Verfahren und eine Funkstation anzugeben, die die bekannten Verfahren zur Paketdatenübertragung verbessern. Diese Aufgabe wird durch die Merkmale der unabhängigen Patentansprüche gelöst. Vorteilhafte Weiterbildungen der Erfindung sind den jeweiligen abhängigen Patentansprüchen entnehmbar.

Erfindungsgemäß wird zur Optimierung von beispielsweise der Einhaltung von vorgegebenen Dienstqualitätsparametern ein korrekt empfangenes Datenpaket zu einer weiteren Einrichtungen und/oder Protokollschicht der Funkstation weitergegeben, wenn ein Kriterium erfüllt ist.

Vorteilhaft wird durch dieses Verfahren sicher gestellt, dass ein korrekt empfangenes Datenpaket empfangsseitig weiter verarbeitet werden kann, auch wenn ein vorangehendes Datenpaket noch nicht korrekt empfangen wurde. In dem einleitend beispielhaft skizzierten Fall kann es zur Einhaltung der vorgegebenen Dienstequalität vorteilhafter sein, auf den Empfang des ersten Datenpakets zu verzichten und das korrekt empfangene zweite und dritte Datenpaket entsprechend nach Erfüllung des Kriteriums zu der höheren Protokollschicht bzw. der weiteren Einrichtung weiterzugeben. Das dritte Datenpaket kann dabei gegebenenfalls auch bereits vor der Erfüllung des Kriteriums weitergegeben werden, da das zweite Datenpaket ebenfalls korrekt empfangen und weitergegeben wurde. Eine Erfüllung des Kriteriums wäre demnach nicht zwingend erforderlich, wenn ein in der ursprünglichen Reihenfolge vorangehendes Datenpaket korrekt empfangen und weitergegeben wurde. Hierdurch wird vorteilhaft eine weitere Verzögerung der Weitergabe von korrekt empfangenen Datenpaketen durch eine Erfüllung des Kriteriums vermieden.

Gemäß der Erfindung ist das Kriterium ein vorgegebenes Zeitintervall. Dieses durch beispielsweise einen Timer gesteuerte Zeitintervall wird jedem empfangenen Datenpaket zugeordnet und gestartet. Nach Ablauf des Zeitintervalls wird ein korrekt empfangenes Datenpaket zu der weiteren Einrichtung und/oder Protokollschicht weitergegeben, auch wenn ein vorangehendes Datenpaket noch nicht korrekt empfangen wurde. Das Zeitintervall definiert demnach einen Zeitraum, in dem einem vorangehenden Datenpaket Zeit für einen korrekten Empfang gegeben wird. Die Dimensionierung des Zeitintervalls kann dabei entsprechend einer Weiterbildung der Erfindung abhängig von einer Dienstqualität der in den Datenpaketen übertragenen Daten erfolgen, wobei das Zeitintervall beispielsweise bei Echtzeitdiensten wie Telefonie oder Videoübertragung, bei denen eine höhere Bitfehlerrate akzeptiert werden kann, kürzer als bei Nicht-Echtzeitdiensten mit einer erforderlichen niedrigen Bitfehlerrate dimensioniert wird.

Gemäß weiteren Ausgestaltungen der Erfindung wird ein Datenpaket, das bis zum Ablauf des Zeitintervalls nicht korrekt empfangen wurde, nicht zu der weiteren Einrichtung und/oder Protokollschicht weitergegeben. Als eine Folge hieraus kann der ARQ-Prozess zur wiederholten Übertragung von nicht korrekt empfangenen Datenpaketen seitens der empfangenen Funkstation beendet werden, indem beispielsweise keine erneute Anforderung eines Datenpakets, sondern der erfolgreiche Empfang des Datenpakets positiv signalisiert wird.

Eine erfindungsgemäße Funkstation eines Funk-Kommunikationssystems weist entsprechende Mittel zum Durchführen des erfindungsgemäßen Verfahrens auf.

Das erfindungsgemäße Verfahren wird nachfolgend anhand von Ausführungsbeispielen näher beschrieben. Dabei zeigen
- FIG 1: Ein Blockschaltbild eines Funk-Kommunikationssystems, und
- FIG 2: eine schematische Darstellung der erfindungsgemäßen Verfahrensabläufe in einer sendenden und empfangenden Funkstation.

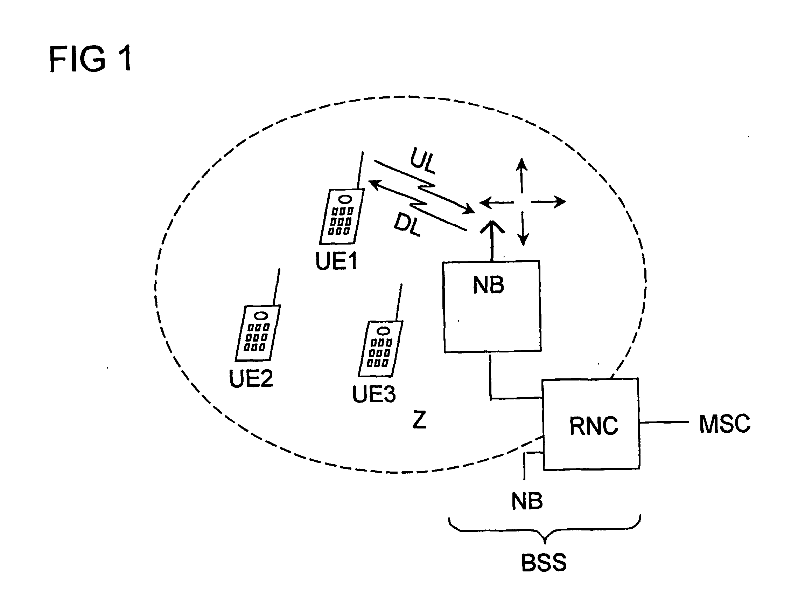

In FIG 1 ist ein beispielhaftes Funk-Kommunikationssystem dargestellt, welches eine Vielzahl von Vermittlungseinrichtungen MSC (engl. Mobile Switching Center) aufweist, die miteinander verbunden sind. In der Regel bildet zumindest eine dieser Vermittlungseinrichtungen MSC einen Zugang zu weiteren Kommunikationssystemen wie beispielsweise einem Festnetz-Kommunikationssystem (PSTN - Public Switched Telephone Network). An die Vermittlungseinrichtungen MSC sind Basisstationen NB (Node B) als Sende-/Empfangseinrichtungen des Funk-Kommunikationssystems angebunden. Die Basisstationen NB stehen über Kommunikationsverbindungen mit Endgeräten, speziell Teilnehmerendgeräten UE (User Equipment) über eine Funkschnittstelle in Verbindung, wobei es sich um mobile oder stationäre Endgeräte handeln kann.

Zwischen der in FIG 1 dargestellten Basisstation NB und den Teilnehmerendgeräten UE im Funkversorgungsbereich dieser Basisstation NB bestehen unidirektionale bzw. bidirektionale Kommunikationsverbindungen mit einer Aufwärtsrichtung UL (Uplink) von dem Teilnehmerendgerät UE zur Basisstation NB und/oder einer Abwärtsrichtung DL (Downlink) von der Basisstation NB zu dem Teilnehmerendgeräten UE.

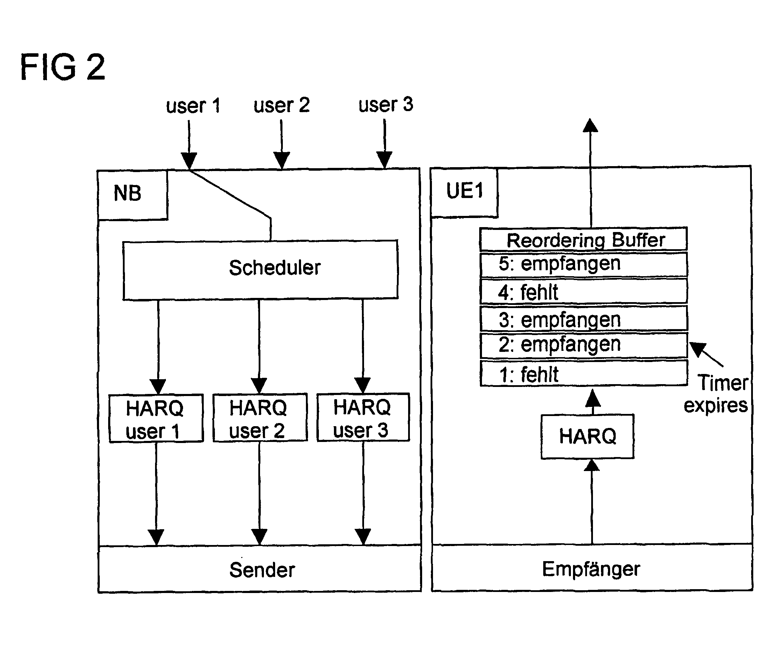

Die FIG 2 zeigt schematisch Funktionalitäten und Einrichtungen einer sendenden Funkstation, in diesem Beispiel eine Basisstation NB, und einer empfangenden Funkstation, in diesem Beispiel ein Teilnehmerendgerät UE. Die gleichen Funktionalitäten können zur Durchführung des erfindungsgemäßen Verfahrens auch in der jeweils anderen Funkstation, gegebenenfalls in abgewandelter oder vereinfachter Form, verwirklicht sein. Der Basisstation NB werden von Netzseite Datenströme von aktuell aufgebauten Verbindungen für die Teilnehmer user 1 bis user 3 zugeführt. Da die Datenpakete beispielsweise in einem gemeinsamen physikalischen Übertragungskanal zu den Teilnehmerendgeräten UE1...UE3 gesendet werden, ist eine zeitliche Steuerung der jeweiligen Aussendung mittels eines so genannten Schedulers verwirklicht. Den Datenpaketen ist weiterhin ein teilnehmerindividueller HARQ-Prozess HARQ user 1...3 zugeordnet, der eine Wiederholung der Übertragung von nicht korrekt empfangenen Datenpaketen steuert.

Das Teilnehmerendgerät UE1 des Teilnehmers user 1 empfängt die von der Basisstation NB gesendeten und für den Teilnehmer user 1 bestimmten Datenpakete ebenfalls unter Einbindung eines HARQ-Prozesses. Nach Empfang eines Datenpakets wird dieses in einen Puffer- bzw. Zwischenspeicher Reordering Buffer gespeichert, der, wie einleitend beschrieben, die ursprüngliche Reihenfolge der Datenpakete vor einer Weitergabe an eine weitere Einrichtung bzw. Protokollschichten wieder herstellt. In der FIG 2 ist beispielhaft die Situation dargestellt, dass das Teilnehmerendgerät UE1 fünf Datenpakete 1...5 eines Datenstroms in dem Speicher Reordering Buffer gespeichert hat. In dem Speicher Reordering Buffer ist die Nummer 1...5 des Datenpakets sowie der aktuelle Status empfangen bzw. fehlt eingetragen. Zum Betrachtungszeitpunkt hat das Teilnehmerendgerät UE1 die Datenpakete 2, 3 und 5 korrekt empfangen (Status empfangen), währenddessen die Datenpakete 1 und 4 noch nicht bzw. noch nicht korrekt empfangen wurden (Status fehlt).

Erfindungsgemäß wird jedem Datenpaket 1...5 in dem Speicher Reordering Buffer ein Timer bzw. ein Zeitintervall zugeordnet. Das Zeitintervall wird dabei beispielsweise abhängig von Dienstqualitätsanforderungen des Datenstroms dimensioniert, d.h. Dienste mit hohen Anforderungen an eine geringe Übertragungsverzögerung, wie beispielsweise Echtzeitdienste, können ein kürzeres Zeitintervall aufweisen als Dienste mit geringeren Anforderungen an Übertragungsverzögerungen, wie beispielsweise Nicht-Echtzeitdienste.

In der dargestellten Situation der FIG 2 läuft das zugeordnete Zeitintervall für das Datenpaket 2 ab (Timer expires), d.h. es muss an eine weitere Protokollschicht bzw. Einrichtung weitergegeben werden, wenn es nicht zu einer nicht akzeptablen Übertragungsverzögerung und einer Verletzung der Dienstequalität kommen soll. Nach dem bekannten Verfahren aus dem Stand der Technik wäre die Weitergabe des Datenpakets 2 aufgrund des noch nicht erfolgten korrekten Empfangs des Datenpakets 1 nicht möglich, wodurch die vereinbarte Dienstequalität nicht eingehalten werden könnte. Nach der Erfindung werden jedoch die korrekt empfangenen Datenpakete 2 und 3 trotz des fehlenden Datenpakets 1 weiter gegeben. Die Weitergabe des Datenpakets 3 kann dabei gegebenenfalls auch vor dem Ablauf des entsprechenden Zeitintervalls erfolgen, da das vorhergehende Datenpaket, d.h. Datenpaket 2, ebenfalls korrekt empfangen und weiter gegeben wurde. Hierdurch kann vorteilhaft durch das jeweilige Zeitintervall hervorgerufene Verzögerung vermieden werden.

Gemeinsam oder getrennt von der Weitergabe des Datenpakets 2 an die weitere Einrichtung bzw. Protokollschicht kann dieser signalisiert werden, dass das Datenpaket 1 innerhalb des ihm zugeordneten Zeitintervalls bzw. bis zum Ablauf des Zeitintervalls des nachfolgenden Datenpakets 2 nicht korrekt empfangen wurde. Wird das Datenpaket 1 nach Ablauf des Zeitintervalls korrekt empfangen, so wird es verworfen oder direkt zu der weiteren Protokollschicht bzw. Einrichtung weiter gegeben. Das empfangende Teilnehmerendgerät UE1 kann zudem den ARQ-Prozess stoppen, indem es der sendenden Basisstation signalisiert, dass keine weiteren Übertragungen dieses Datenpakets 1 erfolgen sollen, oder dass das Datenpaket 1 erfolgreich empfangen wurde, wodurch keine erneute Übertragung auf der Sendeseite angeregt wird. Das Datenpaket 5 wird in der dargestellten Situation noch nicht weiter gegeben, da das zugeordnete Zeitintervall noch nicht abgelaufen ist und das vorhergehende Datenpaket 4 noch nicht bzw. noch nicht korrekt empfangen wurde.

Die erwähnten HARQ-Konzepte sind insbesondere dafür geeignet, eine effiziente Kommunikation mit hoher Datenrate zu garantieren. Gewöhnlich werden Datenpakete vom Sender NB zu einem Empfänger UE gesendet, und der Empfänger UE sendet ACK-(Acknowledge) oder NACK-Nachrichten (Negative Acknowledge), um den fehlerfreien Empfang der Pakete zu bestätigen oder nicht zu bestätigen.

Es entstehen Probleme, wenn empfangene ACKs und NACKs in der sendenden Funkstation NB fehlgedeutet werden. Wenn ein Datenpaket von der empfangenden Funkstation UE1 nicht korrekt empfangen wurde, so sendet diese ein NACK zu der sendenden Funkstation NB, und erwartet nachfolgend eine von dem HARQ - Protokoll eingeleitete wiederholte Übertragung des Datenpakets.

Wird jedoch von der sendenden Funkstation NB das NACK als ein ACK fehldeutet, so nimmt sie an, dass das Datenpaket von der empfangenden Funkstation UE1 richtig empfangen wurde, und überträgt ein nachfolgendes Datenpaket zu der empfangenden Funkstation UE1. Dieser Mechanismus wird in den für den HARQ verantwortlichen Protokollschichten ausgeführt. In dieser Situation wartet die empfangende Funkstation UE1 eine bestimmte Zeit auf eine nochmalige Übertragung des Datenpakets. Dieses kann jedoch beendet werden, wenn bereits Datenpakete von der sendenden Funkstation NB empfangen wurden, die zeitlich erst nach der Übertragungswiederholung des fehlenden Datenpakets übertragen werden sollten. Abhängig von dem verwendeten HARQ-Protokollkonzept können erste Übertragungen und Übertragungswiederholungen eines Datenpakets durch Übertragungsfolgenummern, Kanalnummern und/oder Anzeigen, ob ein Datenpaket eine erste Übertragung oder eine bereits eine Übertragungswiederholung ist, identifiziert werden. Auch ist die Einrichtung eines Zeitintervalls, nach dem eine wiederholte Übertragung eines Datenpakets aufgetreten sein muss, denkbar. Dieses Zeitintervall kann weiterhin beispielsweise zur Bestimmung der Gültigkeit eines Datenpakets in Bezug auf eine maximale Übertragungslaufzeit von Paketen relevant sein, wenn eine große Anzahl von Datenpaketen für weitere Teilnehmer zwischenzeitlich übertragen wurde, und die Anzahl der Übertragungswiederholungen für das noch fehlende Datenpaket nicht den Höchstwert erreicht hat. Hierdurch kann die empfangende Funkstation UE1 nach einer gewissen Zeit feststellen, dass die sendende Funkstation NB das fehlende Datenpaket nicht nochmals senden wird.

Gegebenenfalls können höhere Protokollschichten, wie beispielsweise das RLC-Übertragungswiederholungs-Protokoll (RLC - Radio Link Control) bei einem von dem MAC (Medium Access Control) gesteuerten HARQ-Protokoll, in der empfangenden Funkstation UE1 erkennen, dass ein Datenpaket nicht bzw. nicht korrekt empfangen wurde, und eine wiederholte Übertragung anfordern. Dieser Vorgang kann jedoch nachteilig zu Verzögerungen führen, da er gegebenenfalls ein auf niedrigeren Protokollschichten realisiertes HARQ-Protokoll nicht berücksichtigt, wenn beispielsweise ein Übertragungsfenster beachtet oder eine Umordnung von Datenpaketen durch das HARQ-Protokoll durchgeführt wird. Weiterhin ist die Anforderung einer wiederholten Übertragung durch höhere Protokollschichten in der empfangenden Funkstation UE1 gegebenenfalls von konfigurierten Triggerbedingungen abhängig, d.h. gegebenenfalls kann sie nur periodisch oder nach einer Erkennung einer Anzahl fehlender Datenpakete durchgeführt werden.

Nachfolgend wird ein erfindungsgemäßen Verfahren beschrieben, dass eine schnellere Erkennung einer nicht erfolgenden wiederholten Übertragung eines fehlenden odes nicht korrekt empfangenen Datenpakets erkennt, und eine unmittelbare Anforderung von wiederholten Übertragungen mittels höherer Protokollschichten ermöglicht.

Erfindungsgemäß wird vorgeschlagen, dass die für die Durchführung des HARQ-Protokolls verantwortliche Protokollschicht in der empfangenden Funkstation UE1 den höheren Protokollschichten mitteilt, dass ein ausgesendetes NACK aufgrund eines nicht oder nicht korrekt empfangenen Datenpakets von der sendenden Funkstation NB wahrscheinlich als ein ACK interpretiert wurde, sobald eine Situation entsprechend den vorausgehend beschriebenen Beispielen eingetreten ist. In diesem Fall sind die höheren Protokollschichten in der empfangenden Funkstation UE1 in Kenntnis darüber, dass das fehlende Datenpaket von der sendenden Funkstation NB nicht nochmals innerhalb des normalen HARQ-Prozesses gesendet wird, ungeachtet des aktuellen Zustandes des HARQ-Protokolls. Die höheren Protokollschichten in der empfangenden Funkstation UE1 können dann unmittelbar entsprechende Handlungen einleiten. Dieses können beispielsweise Anforderungen zur wiederholten Übertragung zu der sendenden Funkstation NB über entsprechende Übertragungswiederholungs-Protokolle der höheren Protokollschichten sein, sofern es dem HARQ-Protokoll der unteren Protollschichten nicht möglich ist, ein Datenpaket erfolgreich wiederholt zu senden. Vorteilhaft müssen durch dieses Verfahren die höheren Protokollschichten nicht warten, bis das HARQ-Protokoll die empfangenen Pakete, gegebenenfalls ohne die fehlenden Datenpakete, weiter gibt. Diese schnelle Einleitung einer erforderlichen wiederholten Übertragung eines Datenpakets durch höhere Protokollschichten unabhängig von dem angewandten HARQ-Protokoll ermöglicht vorteilhaft einen höheren Durchsatz an Datenpaketen sowie kürzere Laufzeiten.

Ein Beispiel für das erfindungsgemäße Verfahren ist das HARQ-Protokoll in einem HSPDA-System, das in dem MAC zwischen dem Teilnehmerendgerät UE und der Basisstation NB durchgeführt wird. In diesem Fall signalisiert der MAC des Teilnehmerendgerätes UE dem RLC des Teilnehmerendgerätes UE, dass ein Datenpaket in dem HARQ-Protokoll fehlt bzw. nicht korrekt empfangen wurde. Gesteuert durch diese Signalisierung regt das RLC-Protokoll eine wiederholte Übertragung des fehlenden Datenpakets an.

## Patentansprüche

1. Verfahren zur Übertragung von Datenpaketen in einem Funk-Kommunikationssystem, mit den folgenden Schritten:
von einer sendenden Funkstation (NB) zumindest zwei Datenpakete sequenziell über eine Funkschnittstelle übertragen und in einer empfangenden Funkstation (UE1) für eine Wiederherstellung einer sendeseitigen Reihenfolge und nachfolgender Weitergabe an eine weitere Einrichtung und/oder Protokollschicht der empfangenden Funkstation (UE1) gespeichert werden, wobei bei einem nicht korrekten Empfang eines ersten der zumindest zwei sequenziell übertragenen Datenpakete eine wiederholte Übertragung mittels eines hybriden Automatic Repeat Request (HARQ) -Verfahrens angefordert wird,
einem korrekt empfangenen zweiten der zumindest zwei Datenpakete ein vorgegebenes Zeitintervall zugeordnet und gestartet wird, und
das korrekt empfangene zweite Datenpaket nach Ablauf des zugeordneten Zeitintervalls zu der weiteren Einrichtung und/oder Protokollschicht weitergegeben wird, auch wenn das erste Datenpaket bei Ablauf des Zeitintervalls noch nicht korrekt empfangen wurde.

2. Verfahren nach Anspruch 1, bei dem
ein bis zum Ablauf des Zeitintervalls nicht korrekt empfangenes Datenpaket nicht zu der weiteren Einrichtung und/oder der weiteren Protokollschicht der Funkstation (UE1) weitergegeben wird.

3. verfahren nach Anspruch 2, bei dem
das hybride Automatic Repeat Request (HARQ) -Verfahren nach Ablauf des Zeitintervalls beendet wird.

4. Verfahren nach einem der vorhergehenden Ansprüche, wobei das dem korrekt empfangenen zweiten Datenpaket zugeordnete Zeitintervall abhängig von einer Dienstqualität dimensioniert wird.

5. Verfahren nach einem vorhergehenden Anspruch, bei dem der weiteren Einrichtung und/oder Protokollschicht der Funkstation (UE1) bei der Weitergabe des korrekt empfangenen zweiten Datenpakets signalisiert wird, dass das erste Datenpaket nicht korrekt empfangen wurde.

6. Funkstation (UE1) eines Funk-Kommunikationssystems, wobei die Funkstation (UE1) aufweist:
Mittel zum Empfangen von von einer sendenden Funkstation sequenziell übertragenen zumindest zwei Datenpaketen,
Mittel zum Speichern der empfangenen zumindest zwei Datenpakete für eine Wiederherstellung einer sendeseitigen Reihenfolge und nachfolgende Weitergabe an eine weitere Einrichtung und/oder Protokollschicht der Funkstation (UE1),
Mittel zum Anfordern einer wiederholten Übertragung eines nicht korrekt empfangenen ersten der zumindest zwei sequenziell übertragenen Datenpaketen mittels eines hybriden Automatic Repeat Request (HARQ) -Verfahrens,
Mittel zum Zuordnen und Starten eines vorgegebenen Zeitintervalls zu einem korrekt empfangenen zweiten der zumindest zwei Datenpakete, und
Mittel zum Weitergeben des korrekt empfangenen zweiten Datenpakets nach Ablauf des zugeordneten Zeitintervalls zu der weiteren Einrichtung und/oder Protokollschicht, auch wenn das erste Datenpaket bei Ablauf des Zeitintervalls noch nicht korrekt empfangen wurde.

## Claims

1. Method for transmitting data packets in a radio communication system, having the following steps:
at least two data packets are transmitted sequentially from a transmitting radio station (NB) via a radio interface and said data packets are stored in a receiving radio station (UE1) for restoration of a transmit-side sequence and subsequent forwarding to a further device and/or protocol layer of the receiving radio station (UE1), with repeat transmission being requested by means of a hybrid automatic repeat request (HARQ) method if the first of the at least two sequentially transmitted data packets is not correctly received,
a predetermined time interval is assigned to a correctly received second of the least two data packets and is started, and
the correctly received second data packet is forwarded to the further device and/or protocol layer after the end of the assigned time interval, even if the first data packet has not yet been correctly received by the end of the time interval.

2. Method according to claim 1, in which
a data packet which has not been correctly received by the end of the time interval is not forwarded to the further device and/or further protocol layer of the radio station (UE1).

3. Method according to claim 2, in which
the hybrid automatic repeat request (HARQ) method is terminated after the end of the time interval.

4. Method according to one of the preceding claims, with the time interval assigned to the correctly received second data packet being dimensioned as a function of a quality of service.

5. Method according to a preceding claim, in which it is signaled to the further device and/or protocol layer of the radio station (UE1) during the forwarding of the correctly received second data packet that the first data packet was not correctly received.

6. Radio station (UE1) of a radio communication system, with the radio station (UE1) having;
means for receiving at least two data packets transmitted sequentially from a transmitting radio station,
means for storing the received at least two data packets for restoration of a transmit-side sequence and subsequent forwarding to a further device and/or protocol layer of the radio station (UE1),
means for requesting repeat transmission of an incorrectly received first of the at least two sequentially transmitted data packets by means of a hybrid automatic repeat request (HARQ) method,
means for assigning and starting a predetermined time interval to a correctly received second of the at least two data packets, and
means for forwarding the correctly received second data packet after the end of the assigned time interval to the further device and/or protocol layer, even if the first data packet has not yet been correctly received by the end of the time interval.

## Revendications

1. Procédé pour la transmission de paquets de données dans un système de radiocommunication, comprenant les étapes suivantes :
au moins deux paquets de données sont transmis d'une station radio (NB) émettrice de façon séquentielle au moyen d'une interface radio et sont mémorisés dans une station radio (UE1) réceptrice pour un rétablissement d'un ordre de succession côté émission et d'une transmission successive à un autre dispositif et/ou couche de protocole de la station radio (UE1) réceptrice, une transmission répétée au moyen d'un procédé Automatic Repeat Request (HARQ) hybride étant demandée lors d'une réception non correcte d'un premier des au moins deux paquets de données transmis de façon séquentielle,
un intervalle de temps prédéfini est attribué à un second paquet de données des au moins deux paquets de données reçu correctement, et est démarré, et
le second paquet de donnée reçu correctement est transmis à l'autre dispositif et/ou à l'autre couche de protocole après l'expiration de l'intervalle de temps attribué, même si le premier paquet de données n'a pas encore été reçu correctement à l'expiration de l'intervalle de temps.

2. Procédé selon la revendication 1, dans lequel
un paquet de données non reçu correctement jusqu'à l'expiration de l'intervalle de temps n'est pas transmis à l'autre dispositif et/ou à l'autre couche de protocole de la station radio (UE1).

3. Procédé selon la revendication 2, dans lequel
le procédé Automatic Repeat Request (HARQ) hybride est terminé après l'écoulement de l'intervalle de temps.

4. Procédé selon l'une quelconque des revendications précédentes, dans lequel
l'intervalle de temps attribué au second paquet de données reçu correctement est dimensionné en fonction d'une qualité de service.

5. Procédé selon une revendication précédente, dans lequel on signale à l'autre dispositif et/ou l'autre couche de protocole de la station radio (UE1), lors de la transmission du second paquet de données reçu correctement, que le premier paquet de données n'a pas été reçu correctement.

6. Station radio (UE1) d'un système de communication radio, la station radio (UE1) comprenant :
des moyens pour la réception de au moins deux paquets de données transmis de façon séquentielle par une station radio émettrice,
des moyens pour la mémorisation des au moins deux paquets de données reçus pour un rétablissement d'un ordre de succession côté émission et pour une transmission successive à un autre dispositif et/ou une autre couche de protocole de la station radio (UE1),
des moyens pour demander une transmission répétée d'un premier paquet de données des au moins deux paquets de données transmis de façon séquentielle, reçu non correctement, au moyen d'un procédé Automatic Repeat Request (HARQ) hybride,
des moyens pour l'attribution et le démarrage d'un intervalle de temps prédéfini à un second paquet de données des au moins deux paquets de données reçu correctement, et
des moyens pour la transmission du second paquet de données reçu correctement à l'autre dispositif et/ou l'autre couche de protocole après l'expiration de l'intervalle de temps attribué, même si le premier paquet de données n'a pas encore été reçu correctement à l'expiration de l'intervalle de temps.
